# EUROPÄISCHE PATENTSCHRIFT

(11) **EP 4 204 696 B1**
(45) Veröffentlichungstag und Bekanntmachung des Hinweises auf die Patenterteilung: **31.07.2024**
(21) Anmeldenummer: 21762510.2
(22) Anmeldetag: 26.08.2021
(51) Int. Cl.: F16B 31/02, G01L 1/26, G01L 5/24, G01L 5/00

(54) **SCHRAUBE**
SCREW
VIS

(30) Priorität: 27.08.2020 DE 102020210859
(43) Veröffentlichungstag der Anmeldung: 05.07.2023
(73) Patentinhaber: Fraunhofer-ges. zur Förderung der Angewandten Forschung E.V., 80686 München (DE)
(72) Erfinder: KNAUER, Johannes, 91058 Erlangen (DE); ZESSIN, Henrik, 91058 Erlangen (DE); SPIES, Peter, 91058 Erlangen (DE)
(74) Vertreter: Pfitzner, Hannes
(86) Internationale Anmeldenummer: PCT/EP2021/073627
(87) Internationale Veröffentlichungsnummer: WO 2022/043445

(56) Entgegenhaltungen:
- WO-A1-2016/193887
- WO-A1-2019/240012
- US-A- 4 904 091
- US-A- 5 139 345
- US-A1- 2003 142 721

## Beschreibung

Ausführungsbeispiele der vorliegenden Erfindung beziehen sich auf Verbindungsmittel, wie z.B. eine Schraube, insbesondere eine Schraube mit einer Energieversorgung. Entsprechend weiteren Ausführungsbeispielen kann die Schraube einen Sensor, wie zum Beispiel einen Temperatursensor, aufweisen oder mit einem Sensor verbunden sein.

Das Dokument WO2016/193887 A1 zeigt eine Schraube mit Sensor nach dem Stand der Technik.

Sensoren zur Erfassung von Messdaten, sowie die Elektronik, die die Sensoren auswertet und die Daten möglicherweise drahtlos überträgt, müssen mit Energie versorgt werden. Stand-der-Technik-Ansatz ist es, eine Batterie in derartigen Sensoren vorzusehen, die die Stromversorgung der einzelnen Elektronikeinheiten übernimmt. Nachteilig hierbei ist, dass Batterien nur eine begrenzte Lebensdauer haben und deshalb häufig die Sensoren gewartet oder ausgetauscht werden müssen. Insbesondere bei sehr kleinen Komponenten folgt im Regelfall ein Austausch der gesamten Sensoreinheit. Dieser Austausch der Primärzelle verursacht hohe Kosten durch die Einhaltung von Wartungsintervallen. Ein anderer Ansatz ist die Verwendung von wiederaufladbaren Batterien. Allerdings entstehen auch hier Wartungsaufwände infolge der Wiederaufladung. Ein Beispiel für einen Batteriebetriebenen Sensor ist ein Drucksensor bei einem PKW-Reifen.

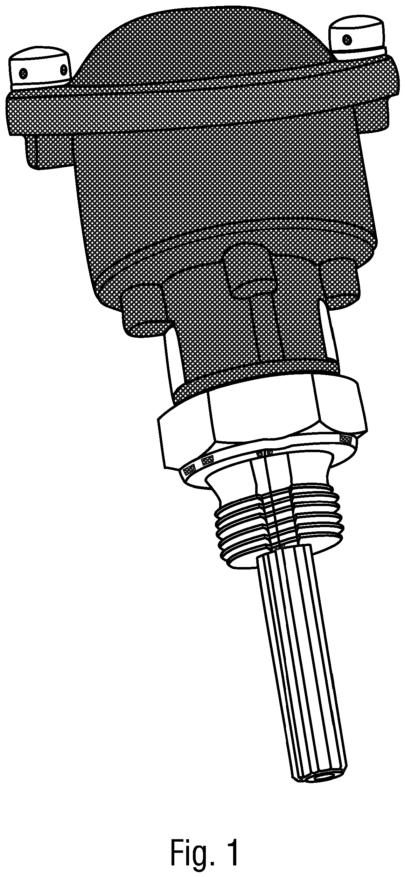

Einsatzgebiet für solche Sensoren sind zunehmend stationäre Anlagen, wie zum Beispiel Produktionsanlagen Hier werden üblicherweise die Elektronik und die Sensorik über Kabel mit Strom versorgt. Ein Beispiel für einen solchen Sensor ist der in Fig. 1 dargestellte Temperatursensor für flüssige Medien. Er wird direkt in das Medium eingeschraubt. Der untere, längliche Teil des Sensors enthält den eigentlichen Temperaturfühler. Gerade bei bewegten Systemen oder, wenn keine kabelgebundene Versorgung zur Verfügung steht, wird auf die oben erläuterte Batterielösung zurückgegriffen, die drahtlos eingebunden werden, was den Verkabelungsaufwand reduziert. Ausgehend von obigen Nachteilen, besteht der Bedarf nach einem verbesserten Ansatz.

Ausführungsbeispielen der vorliegenden Erfindung liegt die Aufgabe zugrunde, die Stromversorgung für Sensorik, insbesondere mobile Sensorik, zu verbessern.

Die Aufgabe wird durch den Gegenstand der unabhängigen Patentansprüche gelöst.

Ausführungsbeispiele der vorliegenden Erfindung schaffen Verbindungsmittel, wie z.B. eine Schraube mit einem Energieversorgungsmittel in Form von zumindest einem Thermoelement, wobei das zumindest eine Thermoelement in das Verbindungsmittel / die Schraube oder einen Schaft des Verbindungsmittels der Schraube eingelassen ist.

Energieversorgungsmittel in Form von Thermoelementen ermöglichen die Verwendung einer Temperaturdifferenz zur Stromerzeugung. Dadurch, dass eine (allgemein Verbindungsmittel) eine gewisse Länge hat, kann eine Temperaturdifferenz zwischen Schraubenkopf und Schraubenspitze ausgenutzt werden. Insofern liegt Ausführungsbeispielen der vorliegenden Erfindung die Erkenntnis zugrunde, dass durch (vertikale) Integration von Thermoelementen in eine Schraube die Möglichkeit besteht, Energie zu harvesten, auch wenn die Schraube an Orten befestigt ist, die keine ausreichende Bewegung, Vibration oder ähnliches haben, um andere Energieharvesterverfahren zu ermöglichen. Vorteilhafter Weise kann mittels eines derartigen Energieharvesters eine komplette Sensorik, Auswerteelektronik und Funkübertragung eines Messsystems mit elektrischer Energie versorgt werden. Diese Elemente können beispielsweise in die Schraube, beziehungsweise in den Schraubenkopf, integriert sein oder an der Schraube oder dem Schraubenkopf angebracht sein. Hierdurch entfallen Kabel und Batterien, was sowohl die Installation als auch die Instandhaltung vereinfacht und dadurch Kosten spart. In manchen Anwendungen ist die Verwendung von Kabeln sogar unmöglich, da die Sensoren an einem schnell rotierenden Objekt angeordnet sind, so dass hier ein kompaktes integriertes System gewünscht ist. Auch Batterien können nicht überall eingesetzt werden, da diese aufgrund von hohen Temperaturen nicht verwendet werden können.

An dieser Stelle sei angemerkt, dass neben Schrauben als Verbindungsmittel auch Bolzen oder ähnliche (längliche) Elemente zum Einsatz kommen können. Da Schrauben die bevorzugten Ausführungsbeispiele darstellen, werden die optionalen Merkmale im Zusammenhang mit Schrauben erläutert, auch wenn die Merkmale auf alle Arten von Verbindungmittel, wie z.B. Bolzen, übertragbar sind.

Bei dem vorgestellten Aufbau liegt der besondere Vorteil in der vertikalen Anordnung der Thermogeneratoren in der Schraubenspitze. Bei einem Kaltstart des Systems wird an diesem Ort die erforderliche Temperaturdifferenz wesentlich früher erreicht. Somit ist das System schneller in Bereitschaft und die Zeit, in der kritische Events verpasst werden können, wird verringert. Wenn man davon ausgeht, dass die Schraubenspitze sehr nah an der Wärmequelle beziehungsweise Wärmesenke angeordnet ist, kann die Temperaturdifferenz und damit die zu harvestende Energie maximiert werden. Die Temperaturdifferenz kann weiter erhöht werden, indem beispielsweise ein Kühlkörper als Wärmesenke eingesetzt wird. Dieser Kühlkörper kann entsprechend weiteren Ausführungsbeispielen natürlich auch als Wärmequelle dienen, wenn zum Beispiel eine externe Bestrahlung erfolgt. Der Kühlkörper wird entsprechend den Ausführungsbeispielen auf den Schraubenkopf aufgesetzt und ist somit höher. Der Effekt tritt verstärkt bei großem Wärmestrom zum umgebenden Medium auf, z. B. bei höherer Windgeschwindigkeit.

Entsprechend den Ausführungsbeispielen weist die Schraube einen Schaft auf, wobei das Thermoelement in die Schraube beziehungsweise in den Schaft eingelassen ist. Hierzu kann entsprechend den Ausführungsbeispielen eine Bohrung vorgesehen sein. Die vertikale Anordnung ermöglicht es, mehr Fläche für die Thermogeneratoren (z. B. zu der Innenwand der Bohrung) zu nutzen. Somit ist das ganze System auch für kleinere Schraubendurchmesser geeignet. Entsprechend einem Ausführungsbeispiel kann die eben erläuterte Bohrung eine Konusbohrung sein. Diese schräge Anordnung ist aus mechanischer Sicht sinnvoll. Dadurch kann ein höherer Anpassdruck für die Thermogeneratoren gegen die Schraubenwand beziehungsweise Wärmebrücke realisiert werden. Es werden Luftanschlüsse vermieden und der thermische Widerstand zur Wärmequelle beziehungsweise Wärmesenke verringert. Der Schraube steht somit mehr elektrische Leistung zur Verfügung. Außerdem gestaltet sich der Zusammenbau wesentlich einfacher und reproduzierbarer. Diese Vorteile werden verstärkt, wenn entsprechend weiteren Ausführungsbeispielen der Thermogenerator an einer Seite angelötet ist.

Entsprechend Ausführungsbeispielen ist eine Wärmebrücke zwischen dem Thermoelement (z. B. im Fußpunkt der Schraube), dem Schraubenkopf beziehungsweise dem Kühlkörper vorgesehen. Diese Wärmebrücke kann beispielsweise gegenüber der Schraube beziehungsweise dem Schraubenschaft isoliert sein. Eine Verlötung (siehe oben) kann zwischen einer Wärmebrücke und dem Thermogenerator vorgesehen sein.

Entsprechend einem Ausführungsbeispiel kann das Thermoelement ringförmig ausgebildet sein. Dies kann unter anderem durch flächige, flexible (biegsame) Thermogeneratoren realisiert werden. Eine weitere Vergrößerung der Kontaktflächen wird durch den Einsatz von derartigen ringförmigen Thermogeneratoren erreicht.

Wie oben schon im Zusammenhang mit den Vorteilen erläutert, kann eine Elektronik in die Schraube integriert sein. Hierbei ist entsprechend den Ausführungsbeispielen vorgesehen, dass die Elektronik einen Prozessor für eine Sensorik, die Sensorik selber und/oder Kommunikationsmittel aufweist. Entsprechend weiteren Ausführungsbeispielen kann die Elektronik auch einen Energiespeicher aufweisen. Dieser Energiespeicher dient zur Zwischenspeicherung der elektrischen Energie. An dieser Stelle sei angemerkt, dass die Elektronik beispielsweise zwischen Schraubenkopf und dem Kühlkörper angeordnet sein kann. Der Kühlkörper kann mittels einer optionalen Wärmebrücke mit dem Thermoelement verbunden sein, wobei die Wärmebrücke beispielsweise durch eine Bohrung in der Elektronik hindurchragt.

Entsprechend den Ausführungsbeispielen kann die Sensorik beispielsweise einen Temperatursensor umfassen, dieser kann beispielsweise im Fuß der Schraube vorgesehen sein. Entsprechend einem weiteren Ausführungsbeispiel wäre es auch denkbar, dass die Schraube eine Solarzelle aufweist. Hintergrund hierzu ist, dass das Energieharvesting mit dem Thermogenerator insbesondere bei einer Temperaturdifferenz erfolgt. Diese Temperaturdifferenz kann beispielsweise dadurch herrühren, dass sich die Außentemperatur in Folge von Sonnenlichtbestrahlung gegenüber der Temperatur der Schraubenspitze erhöht oder bei Ausbleiben der Bestrahlung, der Schraubenkopf beziehungsweise Kühlkörper schneller abkühlt. Im Zeitraum, wo Sonnenlicht auf die Schraube fällt, aber Schraubenkopf und Schraubenspitze ähnliche Temperaturen aufweisen, ist die Effizienz des Energieharvestings mit dem Thermoelement begrenzt. Zusätzliche Energie kann dann mit der Solarzelle generiert werden.

Entsprechend den Ausführungsbeispielen können Schraubenkopf und Kühlkörper integriert beziehungsweise kombiniert sein. Die Nutzung des Schraubenkopfes als Kühlkörper ermöglicht eine größere Kühlfläche bei gleichbleibender Größe des Schraubenaufbaus. Dadurch erhöht sich die Leistungsdichte des Moduls gegenüber einer getrennten Ausführung von Schraubenkopf und Schraubenkühlkörper.

Entsprechend den Ausführungsbeispielen sind also der Schraubenkopf entsprechend Wärmequelle oder Wärmesenke und die Schraubenspitze das entsprechende Gegenstück. Dies kann entsprechend den Ausführungsbeispielen von der Zeit beziehungsweise Umgebungssituation abhängen.

Entsprechend den Ausführungsbeispielen kann davon ausgegangen werden, dass Kühlkörper und Wärmebrücke zweiteilig sind. Eine zweiteilige Ausführung von Kühlkörper und Wärmebrücke ermöglicht es, möglichst viele Flächen für die Elektronik bzw. Batterie zu nutzen, da diese von oben eingesetzt werden kann. Ein besseres thermisches Verhalten entsteht aber, wenn die Elemente Kühlkörper und Wärmebrücke als Integralbauteil ausgeführt sind.

Durch die Verwendung eines Normteils als Außengeometrie der Schraube, wird die nachträgliche Integration des Messsystems in bereits bestehenden Anwendungen vereinfacht. Auch kann das Messsystem gegen ein vorhandenes Messsystem, welches die gleichen Normteile verwendet, ausgetauscht werden, ohne dass Änderungen am sonstigen Aufbau vorgenommen werden. Durch die Verwendung einer Schraube oder eines Profils, welches geklemmt angebracht wird, wird ein guter thermischer Kontakt zur Wärmequelle/-senke vorgesehen.

Weiterbildungen sind in den Unteransprüchen definiert. Ausführungsbeispiele der vorliegenden Erfindung werden anhand der beiliegenden Zeichnungen erläutert. Es zeigen:
- Fig. 1: eine Temperaturmessschraube gemäß dem Stand der Technik;
- Fig. 2a und 2b: schematische Darstellungen von Schrauben mit integrierten Energieversorgungsmitteln gemäß einem Basisausführungsbeispiel und einem erweiterten Ausführungsbeispiel;
- Fig. 3a und 3b: schematische Darstellungen (Schnittdarstellungen) einer Schraube mit einer integrierten Energieharvester beziehungsweise vertikal angeordneten Thermogeneratoren als Energieharvester gemäß den Ausführungsbeispielen;
- Fig. 4: eine schematische Schnittdarstellung eines Aufbaus einer Schraube mit Temperatursensor an der Spitze gemäß weiteren Ausführungsbeispielen;
- Fig. 5: ein schematisches Schnittbild einer thermoelektrischen Schraube mit schrägen Innenflächen gemäß weiteren Ausführungsbeispielen.

Bevor nachfolgend Ausführungsbeispiele von den Erfindern unter Bezugnahme auf die Figuren erläutert werden, wird darauf hingewiesen, dass gleichwirkende Elemente und Strukturen mit gleichen Bezugszeichen vorgesehen sind, sodass die Beschreibung derer aufeinander anwendbar bzw. austauschbar ist.

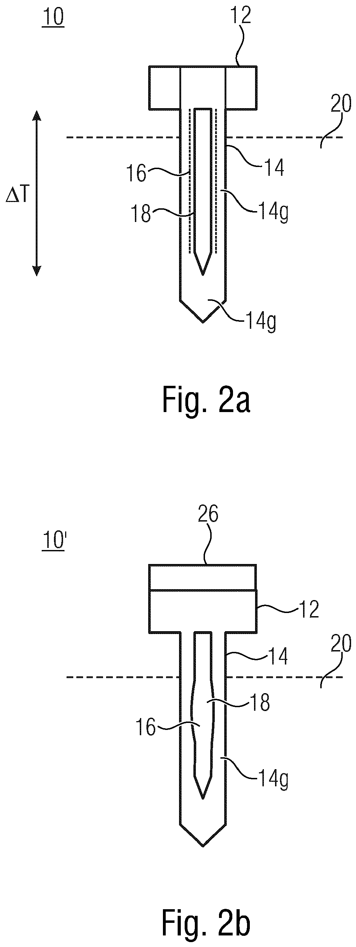

Fig. 2a zeigt ein Verbindungsmittel bzw. eine Schraube 10 mit einem Schraubenkopf 12, einem Schaft 14, der beispielsweise ein Gewinde 14g aufweisen kann. Die Schraube weist hier beispielsweise einen Hohlraum 16 auf. Dieser Hohlraum 16 kann durch eine Bohrung, ausgehend vom Schraubenkopf 12, in den Schraubenschaft 14 realisiert sein. Bevorzugter Weise erstreckt sich der Hohlraum 16 über einen großen Teil der Schraubenlänge der Schraube 10, z.B. vom Kopf 12 in Richtung der Spitze.

In den Hohlraum 16 ist ein Energieharvester, hier ein Thermoelement 18, eingebettet. Das Thermoelement 18 ist in den Hohlraum 16 eingebettet bzw. allgemein im Hohlraum 16 angeordnet z.B. in der Schraubenspitze 14s beziehungsweise einem Bereich des Gewindes 14g. Das Thermoelement 18 ist ausgebildet, um bei einer Temperaturdifferenz zwischen den zwei Enden des Verbindungsmittels 10 eine elektrische Leistung bereitzustellen, z. B. einer Elektronik, einer Sensorik oder einem Funkelement (nicht dargestellt). Hierbei erfolgt eine Umwandlung von thermischer in elektrische Energie.

Die Temperaturdifferenz ΔT kann zweierlei Ursachen haben. So wird davon ausgegangen, dass die Schraube 10 in ein Element 20, wie zum Beispiel eine Brücke, einen Brückenträger, einen Brückenpfeiler oder ein Betonelement eingeschraubt ist. Dieses Element 20 ist aufgrund seiner Masse thermisch sehr träge und hat über einen bestimmten Zeitraum, z. B. den Tag verteilt eine relativ konstante Temperatur. Im Gegensatz dazu schwankt die Temperatur um den Schraubenkopf herum stärker. Beispielsweise kann diese sich bei Sonneneinstrahlung über den Tag hin sehr stark erhöhen, während sie nachts abfällt. Die Temperaturänderung ist beispielsweise dann zu beobachten, wenn die Sonneneinstrahlung variiert. An dieser Stelle sei angemerkt, dass die beschriebene Umgebung Luft auf der einen und Stahl auf der anderen Seite nur exemplarisch ist und auch anders sein kann. Im Falle von einem sehr warmen Schraubenkopf 12, im Vergleich zu dem Schraubengewinde 14g, dient das Schraubengewinde 14g beziehungsweise das das Schraubengewinde umgebende Material 20 als Wärmesenke, während der Schraubenkopf die Wärmequelle dargestellt wird. Im Falle einer sehr kühlen Umgebungsluft, im Vergleich zu dem Material 20 beziehungsweise dem Bereich des Gewindes 14g, dient das Material 20 als Temperaturquelle, während der Schraubenkopf 12 die Temperatursenke darstellt. Umso länger die Schraube beziehungsweise das Thermoelement 18 ist, umso höher ist der Temperaturgradient. Auf den Temperaturgradienten wirkt sich insbesondere das ΔT aus, wobei bei einer höheren Schraubentiefe eher davon auszugehen ist, dass das ΔT auch größer ist.

Entsprechend den Ausführungsbeispielen kann der Effekt der Temperatursenke beziehungsweise Temperaturquelle am Schraubenkopf 12 verstärkt werden, indem ein Kühlkörper vorgesehen ist.

Entsprechend den Ausführungsbeispielen kann die Schraube 10 auch noch einen Temperatursensor oder eine andere Art von Sensor umfassen. Gerade bei Temperaturmessungen hat das zu messende Medium im Körper 20 häufig eine andere Temperatur als die Umgebung. Dies verursacht, unabhängig von Sonneneinstrahlung, eine Temperaturdifferenz. Wenn man beispielsweise von einer Mediumstemperatur von bis zu 160°C ausgeht, kann bei einer Umgebungstemperatur von 20 bis 30°C eine sehr hohe Temperaturdifferenz ΔT erreicht werden, die dann dazu genutzt wird, um ausgehend von dieser Temperaturdifferenz eine elektrische Energie zu generieren. Die Temperaturdifferenz wird dann mittels eines Thermogenerators in elektrische Energie umgewandelt. Den Vorgang nennt man auch Energieharvesting. An dieser Stelle sei angemerkt, beziehungsweise wie auch in Fig. 2 schon gezeigt, dass es nicht zwingend notwendig ist, dass ein flüssiges Medium vorliegt. Eine Temperaturdifferenz herrühren aus der Sonneneinstrahlung oder einer anderen Temperaturquelle kann genauso ausreichen, um ein entsprechendes Energieharvesting zu ermöglichen. An dieser Stelle sei zusätzlich angemerkt, dass die Temperaturdifferenz sowohl nur positiv als auch negativ sein kann, was dem oben erläuterten Fall von Temperatursenke beziehungsweise Temperaturquelle entspricht.

Entsprechend den Ausführungsbeispielen ist, wenn man von der Sonneneinstrahlung ausgeht, ein Energieharvesting immer in den Übergangsbereichen, das heißt bei Sonnenaufgang und Sonnenuntergang, möglich, da hier die unterschiedlichen Abkühlraten des Materials 20 gegenüber dem Schraubenkopf 12 beziehungsweise dem Kühlkörper und die unterschiedlichen Aufheizraten des Schraubenkopfes 12 beziehungsweise Kühlkörpers im Vergleich zu dem Material 20 zu Temperaturunterschieden führen. Über den Tag könnte sich eine relativ konstante Temperatur für das Element 20 und den Schraubenkopf 12 einstellen, so dass hier die Energieharvesting Effizienz sinkt. Um diesem Effekt entgegenzuwirken, kann entsprechend weiteren Ausführungsbeispielen eine Solarzelle am Schraubenkopf vorgesehen sein. Dies ist in Abbildung 2b gezeigt.

Fig. 2b zeigt die Schraube 10', die im Wesentlichen mit der Schraube 10 übereinstimmt, aber auf dem Schraubenkopf 12 noch eine zusätzliche Solarzelle angebracht hat. Über diese Solarzelle kann während des Tages, wenn die Sonneneinstrahlung intensiv ist, zusätzlich elektrische Energie generiert werden. Insofern umfasst die Schraube 10' neben dem Thermoelement 18 ein weiteres Energieversorgungsmittel 26, nämlich die Solarzelle. Hierbei ist das Thermoelement 18 in der Lage, ausgehend von Temperaturgradienten oder Temperaturänderungen, Energie zu generieren, während die Solarzelle 26 konstant bei Sonneneinstrahlung Energie generiert. Durch die Verwendung von zwei, auf unterschiedliche Zeitpunkte optimierte Energieharvester, kann insgesamt mehr Energie generiert werden.

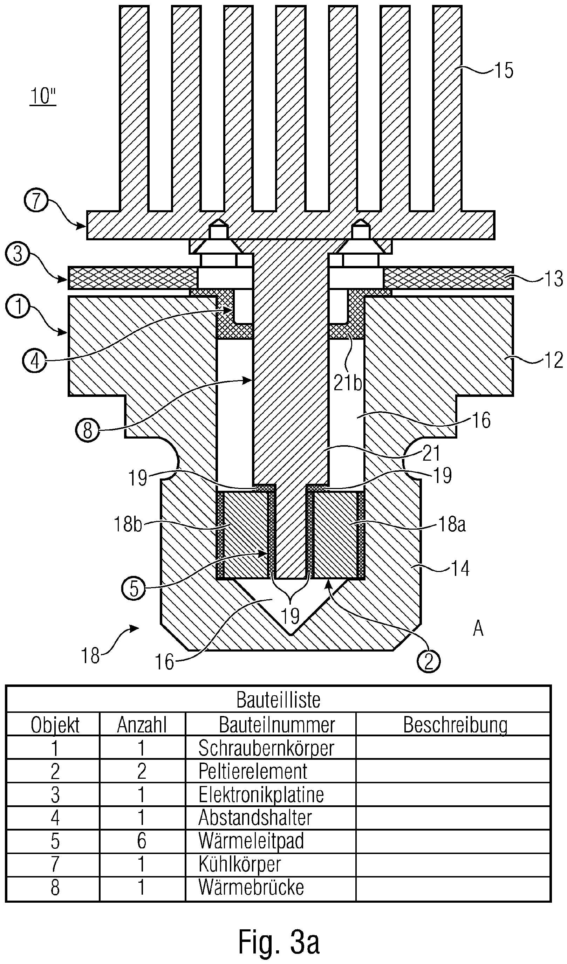

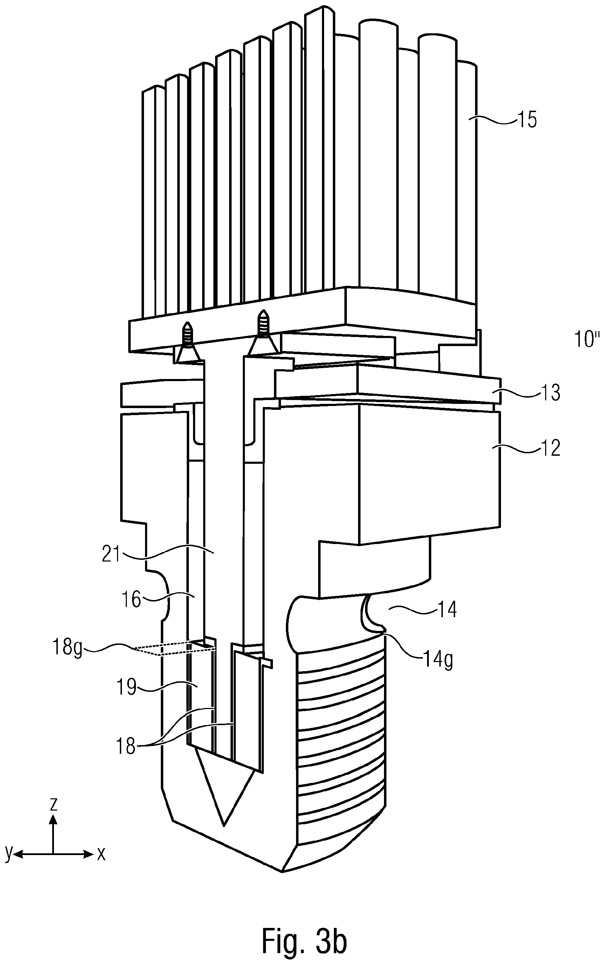

Bezug nehmend auf Fig. 3 werden nun Implementierungen der Schraube 10" erläutert.

Fig. 3a zeigt eine Schraube 10". Die Schraube hat hier einen Schraubenkopf 12 sowie einen Schaft 14 mit Gewinde 14g. Im Schaft 14 ist das Thermoelement 18 bzw. zwei Thermoelemente 18a und 18b vorgesehen.

Die elektrischen Anschlüsse für das Thermoelement sind mit den Bezugszeichen 18s versehen. Über diese kann die entsprechende Thermospannung abgegriffen werden. Das Thermoelement 18 ist fast an der Spitze des Kopfes angeordnet, wobei der Abstand insbesondere durch den spitzen Winkel des Bohrers für die Bohrung 16 bestimmt wird. Bevorzugter Weise erstreckt sich das Thermoelement soweit als möglich entlang der Länge der Schraube 10". Die zwei hier dargestellten Thermoelement / Peltierelemente 18 sind z.B. durch Wärmeleitplatten 19 (hier sechs Stück, z.B. zwischen Thermoelement 18 und Außenwand, zwischen Thermoelement 18 und Wärmebrücke 21 (Innenseite, horizontale Fläche)) umgeben. Bei den hier dargestellten Peltierelementen ist das Peltierelement 18 am Ende der Bohrung 16 angeordnet, während zu dem anderen Ende am Schraubenkopf eine Wärmebrücke 21 vorgesehen ist. Diese Wärmebrücke 21 ist optional und entsprechend Ausführungsbeispielen signifikant dünner als der Durchmesser der Bohrung 16, um eine bestmögliche Isolation zwischen dem wärmeleitenden Element 21 und dem Schraubenmaterial des Schaftes 14 zu realisieren. Hierzu kann optionaler Weise ein Halter (4 oder 21h) angeordnet sein, der einen Abstand zwischen dem Schraubenschaft 14 beziehungsweise dem Schraubenkopf 12 und der Wärmebrücke 21 sicherstellt.

In dem Ausführungsbeispiel dient der Schraubenkopf nicht direkt als Temperatursenke beziehungsweise -quelle, sondern es ist hier ein Kühlkörper 15 vorgesehen. Dieser Kühlkörper ist direkt mit der Wärmebrücke 21 verbunden. Zwischen Kühlkörper 15 und Schraubenkopf 12 kann auch nur eine Platine 13, eine Elektronikplatine, vorgesehen sein. Durch diese ragt beispielsweise die Wärmebrücke 21 hindurch. Dazu kann die Platine 13 ein Loch in der Mitte haben. Entsprechend den Ausführungsbeispielen ragt der Abstandshalter 21h über den Schraubenkopf 12 aus der Bohrung 16 hinaus, so dass die Platine 13 auf den Abstandshalter 21h aufgesetzt werden kann. Hierdurch, sowie einem weiteren Abstandshalter, wird dann die Platine 13 unter Zuhilfenahme der Wärmebrücke 21 in Position gehalten. Über nicht dargestellte Kabel zwischen dem Peltierelement 18 und der Elektronik 13 kann diese mit Strom versorgt werden.

Nachdem nun die Struktur erläutert wurde, wird nun die Funktionsweise der Schraube 10" dargestellt. Die Schraube 10" kann beispielsweise heiß sein. Dadurch wird die Seite des Thermogenerators 18 erwärmt. Durch die Wärmeleitpads 19 werden die Kontaktflächen des Thermogenerators 18 erwärmt. An dieser Stelle sei angemerkt, dass die Wärmleitpads 19 ein elastisches Schnittmaterial mit ausreichender Elastizität aufweisen können, um beispielsweise Beschädigungen des Peltierelements 18 durch Scherkräfte zu vermeiden. Der Kühlkörper dient hier als Temperatursenke und ist deshalb am gegenüberliegenden Punkt in Bezug auf das Thermoelement 18, nämlich auf dem Schraubenkopf 12 angebracht.

Dieses Zwischenstück 21h ist beispielsweise aus Plastik und dient der Fixierung des Kühlkörpers 15 und der Elektronikplatine 13 an dem Schraubenkopf 12. Durch das Plastikmaterial wird der Wärmestrom reduziert.

Bezüglich der Elektronikplatine 13 und dem Kühlkörper 15 sei angemerkt, dass diese als Vergussmasse befestigt werden können. Alternativ wären auch Nylonschrauben denkbar, welche eine möglichst geringe Wärmeleitfähigkeit besitzen.

Wie hier dargestellt, kann zwischen Kühlkörper 15 und Platine 13 ein Luftspalt vorgesehen sein. Ebenfalls wäre es denkbar, dass zwischen Platine 13 und Schraubenkopf 12 ein Luftspalt vorgesehen ist. Dieser Luftspalt dient der thermischen Entkopplung der warmen und kalten Seite. Anstelle des Luftspalts können selbstverständlich auch andere thermisch isolierende Materialien vorgesehen sein.

An dieser Stelle sei angemerkt, dass entsprechend Ausführungsbeispielen das Thermoelement 18 / die Thermoelement 18a und 18b eine horizontale Temperaturdifferenz (also quer zur Schraubenrichtung) nutzt bzw. die vertikale Temperaturdifferenz zwischen Kopf und Spitze in eine horizontale Temperaturdifferenz umwandelt. Hierzu sind die zwei Thermoelement 18a und 18b (bzw. das eine Thermoelement 18) mit einer ersten Seite an der Wand des Schafts bzw. des Hohlraums 16 (anliegend) angeordnet, um hier eine gute Temperaturübertragung zur Schraube sicherzustellen, wobei die andere (zweite) Seite (nicht an der Innenwand anliegenden Seite) des Thermoelements 18 mit der Wärmebrücke 21 gekoppelt ist. Die Wärmebrücke 21 erstrecken sich vertikal von dem/den Thermoelement 18 sodass durch diese Anordnung mit den horizontal ausgerichteten Thermoelementen 18a und 18b eine vertikale Temperaturdifferenz genutzt werden kann.

Die vertikale Anordnung der Thermogeneratoren 18, der Wärmebrücke 21 und des Kühlkörpers 15, zusammen mit der Anordnung des Thermogenerators 18 mitten in der Schraube beziehungsweise dem Schraubenschaft, ermöglicht ein schnelles Aufheizen (beziehungsweise schnelles Entstehen der Temperaturdifferenz) und dadurch ein schnelles Erzeugen von elektrischer Leistung bei Änderung der Temperatur, z. B. der Mediumstemperatur. Außerdem können damit, wie in diesem Beispiel, zwei Peltierelemente eingesetzt werden. An dieser Stelle sei angemerkt, dass auch wenn hier die Peltierelemente 18 vertikal angeordnet sind, auch eine horizontale Anordnung möglich wäre.

Ferner ist neben dem Einsatz von zwei oder mehr quaderförmigen Thermogeneratoren 18 an der Wärmebrücke auch ein Einsatz eines ringförmigen Thermogenerators möglich.

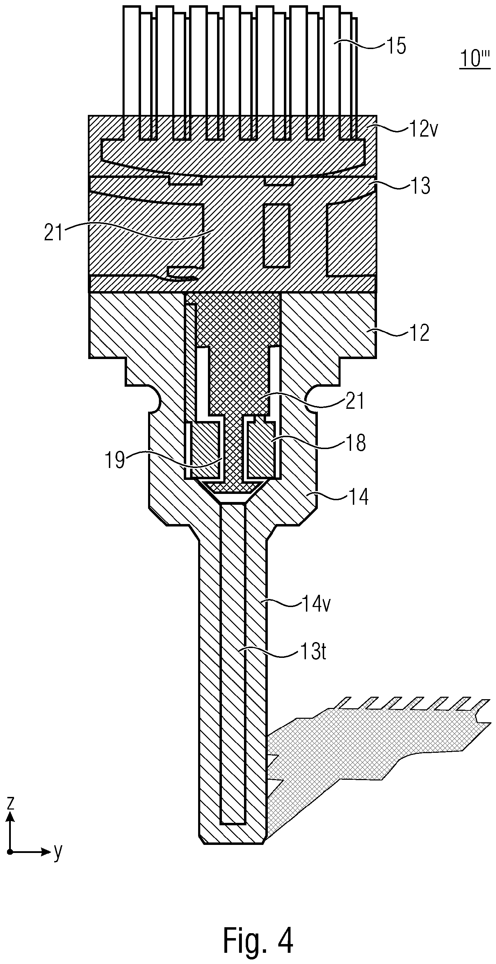

Entsprechend den weiteren Ausführungsbeispielen kann in die oben erläuterte Schraube 10" auch ein Temperatursensor integriert sein. Auch wäre es denkbar, dass die Thermoelemente zur Temperaturmessung verwendet werden. Diese zwei Varianten werden nachfolgend Bezug nehmend auf Fig. 4 erläutert.

Ein weiterer möglicher Aufbau entsprechend einem weiteren Ausführungsbeispiel beinhaltet einen Temperatursensor in der Schraubenspitze, wie es in Fig. 4 dargestellt ist. Fig. 4 zeigt eine Schraube 10‴, die in etwa vergleichbar ist mit der Schraube 10". Bei der hier vorliegenden Schraube ist der Bereich oberhalb des Schraubenkopfes 12 bis zum Kühlkörper 15, in welchem die Wärmebrücke 21 und die Elektronik 13 vorgesehen sind, mit einer Vergussmasse 12v vergossen. Durch diese Vergussmasse 12v wird der Schraubenkopf 12 vergrößert. Die Anordnung von Thermoelementen 18, Wärmebrücke 21 im Inneren des Schraubenschaftes 14, ist mit den vorher diskutierten Ausführungsbeispielen aus Fig. 3a und 3b vergleichbar. An der Spitze der Schraube beziehungsweise des Schraubenschaftes ist der Schraubenschaft um das Element 14v verlängert. In diesem Element 14v befindet sich ein Temperatursensor 13t. Durch diese Anordnung können Mediumstemperaturen, wie im Stand der Technik (vgl. Fig. 1), ermittelt werden. Die Funktion der Schraube hinsichtlich des Betriebs mit dem thermoelektrischen Energieharvesting ist vergleichbar mit dem Ausführungsbeispiel aus Fig. 3a und 3b.

Entsprechend weiteren Ausführungsbeispielen können die Thermogeneratoren 18 auch selbst als Temperatursensor fungieren. Durch die Auswertung der Spannung der Peltierelemente in Abhängigkeit von Temperaturdifferenzen könne Kalibrierwerte gefunden werden, die einen Rückschluss auf die relative Temperatur zulässt. Zusammen mit einem Temperatursensor, der die absolute Temperatur an einer leicht zugänglichen Stelle oder in unkritischer Umgebung misst und die thermischen Modelle des Gesamtsystems, kann auf die absolute Temperatur an der Stelle, an der sich die Thermogeneratoren befinden, ein Rückschluss gezogen werden.

Entsprechend weiteren Ausführungsbeispielen ist es selbstverständlich auch möglich, dass neben dem Temperatursensor 13t oder dem als Temperatursensor implementierten Thermoelement 18 weitere Sensoren, wie zum Beispiel ein Drucksensor, Vibrationssensor oder Spannungssensor vorgesehen sind.

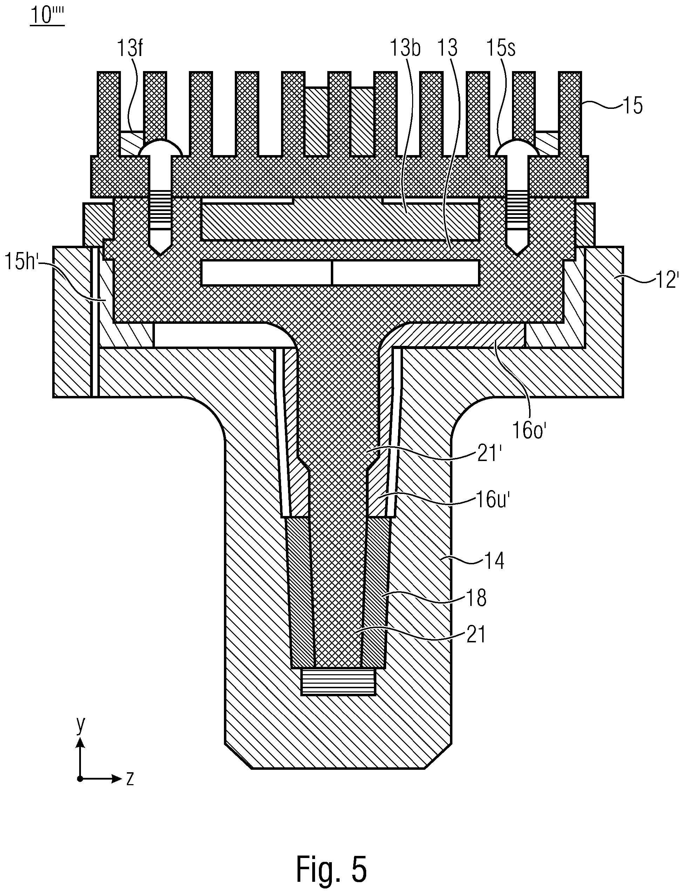

Entsprechend weiteren Ausführungsbeispielen besteht die Möglichkeit, die Innenflächen der Schraube schräg auszuführen, wie das in Fig. 5 gezeigt ist. Fig. 5 zeigt eine Schraube 10ʺʺ mit einem Schraubenkopf 12' und einem Schraubenschaft 14, der auch ein Gewinde aufweisen kann (nicht dargestellt). In dem Schraubenkopf 12` ist eine Ausfräsung 16o' vorgesehen, wobei sich eine Bohrung 16u' in dem Schraubenschaft 14 erstreckt. Diese Bohrung 16u' ist konisch ausgeführt. In der Bohrung 16u' ist wiederum das Peltierelement 18 vorgesehen, das hier direkt in Kontakt mit der Oberfläche der Bohrung 16u' ist. Das Peltierelement ist beispielsweise konisch ausgeführt und hat in der Mitte ebenfalls eine Bohrung, in die die Wärmebrücke 21' hineinragt. Unterhalb der Elemente 18 und 21 kann der Bohrauslauf, beispielsweise von der Bohrspitze, vorgesehen sein. Auf der Oberseite des Schraubenkopfes 12` ist ein Kühlkörper 15 vorgesehen. Zwischen Kühlkörper 15 und Peltierelement 18 befindet sich eine Wärmebrücke 21, die die Temperaturdifferenz zwischen Schraubenkopf 12' und Schraubenspitze 14 entsprechend weiterleitet. Das Wärmeleitelement 21' hat hier eine Art Y-Form, das heißt also weitet sich im Schraubenkopf auf, um großflächig den Kühlkörper 15 zu kontaktieren. In dem Schraubenkopf befindet sich eine optionale Elektronikplatine 13 mit einem Energiespeicher 13b. Die Elektronikplatine 13 und der Energiespeicher 13b sind zwischen Schraubenkopf 12' beziehungsweise Wärmeleitbrücke 21' und Kühlkörper vorgesehen. Sowohl Elektronikplatine 13 als auch Kühlkörper 15 und Wärmeleitbrücke 21' sind unter Zuhilfenahme der Schrauben 15s beziehungsweise des Abstandshalters 15h' befestigt.

Entsprechend optionalen Ausführungsbeispielen umfasst die Elektronikplatine 13 auch ein Funkelement.

In obigen Ausführungsbeispielen wurde von einer gesteckten beziehungsweise geschraubten Verbindung ausgegangen. Eine weitere Verbesserung des Aufbaus gelingt beispielsweise dadurch, dass der Thermogenerator 18 auf einer Seite angelötet wird. Das thermische Schnittstellenmaterial wird dann auf der anderen Seite des Thermogenerators 18 eingesetzt. Dazu wird beispielsweise ein lötbares Material auf der einen Seite, beispielsweise als Wärmebrücke, eingesetzt. Das heißt also, dass entsprechend den Ausführungsbeispielen die Wärmebrücke 21' mit dem Thermogenerator 18 verlötet ist. Hierzu ist es vorteilhaft, dass die Oberfläche des Peltierelements 18 metallisiert ist und Löte mit einer niedrigen Schmelztemperatur als die Schmelztemperatur des Lötens selber, welches im Peltierelement vorhanden ist, eingesetzt werden.

Entsprechend einem weiteren Ausführungsbeispiel ist es auch möglich, statt dem Kühlkörper 15 beziehungsweise zusätzlich zu dem Kühlkörper 15, den Schraubenkopf 12' als Kühlkörper zu nutzen. Diese Varianten sind selbstverständlich auf alle oben erläuterten Ausführungsbespiele übertragbar. Bezüglich dem Ausführungsbeispiel aus Fig. 4 sei angemerkt, dass hier das Vergussmaterial 12f den Schraubenkopf 12 verlängert. Dieses kann beispielsweise eine Form der Schlüsselweite des Schraubenkopfes haben. Wird ein derartiges Vergussmaterial oder Nylonmaterial als Verlängerung des Schraubenkopfes verwendet, ist das Anzugsmoment begrenzt. Eine Alternative ist, dass die Verbindung zwischen Schraubenkopf 12 und Kühlkörper 15 und dem Thermoelement erst nach Festziehen hergestellt wird.

Als Beispiel für eine Ausgangsgeometrie des Aufbaus wurde bisher eine Schraube mit einer Schlüsselweite genannt. Es ist selbstverständlich auch denkbar, dass andere Geometrien eingesetzt werden. Beispiele hierfür sind Bolzen, Lanzen, Rund-, Vierkant-, Sechskantprofile oder weitere beliebige Geometrien. Auch kann ein Innensechskant beispielsweise über den Kühlkörper ausgebildet werden. Denkbar wäre es auch, dass der Schraubenkopf einen Innensechskant aufweist, in welchem dann die Wärmebrücke 21 beziehungsweise 21', Elektronik 13 und Kühlkörper 15 eingesteckt werden.

Wärmebrücke 21 beziehungsweise 21' und Kühlkörper 15 wurden bisher als zwei verschraubte Bauteile dargestellt. In Ausführungsbeispielen ist zwischen diesen Bauteilen 15 und 21/21' eine Wärmeleitpaste vorgesehen. Es ist selbstverständlich auch möglich, dass der Kühlkörper 15 an die Wärmebrücke 21 beziehungsweise 21' als ein Bauteil ausgeführt ist. In einem solchen Fall ist dann die Elektronikplatine 13 derart gestaltet, dass sie von der Seite eingesetzt werden kann. Insofern umfasst die Elektronikplatine nicht, wie oben dargestellt, eine konzentrische Form, die sich um die Wärmebrücke 21 beziehungsweise 21' erstreckt.

Entsprechend Ausführungsbeispielen kommen als Verbindungsmittel beispielsweise Bolzen zum Einsatz.

## Patentansprüche

1. Verbindungsmittel (10, 10', 10", 10‴, 10ʺʺ) mit folgenden Merkmalen:
einem Energieversorgungsmittel in Form von zumindest einem Thermoelement (18, 18'), wobei das zumindest eine Thermoelement (18, 18') in einen Schaft (14) des Verbindungsmittels (10, 10', 10", 10‴, 10"") eingelassen ist;
wobei das Verbindungsmittel (10, 10', 10", 10‴, 10"") eine Elektronik (13) umfasst; wobei die Elektronik (13) eine Sensorik, einen Prozessor für die Sensorik und/oder Kommunikationsmittel aufweist; und wobei die Sensorik, der Prozessor oder die Kommunikationsmittel durch die Energieversorgungsmittel mit Energie versorgt werden,
wobei das Verbindungsmittel in Form einer Schraube oder Bolzen realisiert ist, **dadurch gekennzeichnet, dass**
sich das Thermoelement (18, 18') oder das Thermoelement (18, 18') in Kombination mit einer Wärmebrücke (21) entlang der Längsrichtung der Schraube oder des Bolzens von einem Punkt im Bereich eines Schraubengewindes (14g) der Schraube oder des Bolzens oder von einer Schraubenspitze zu dem Schraubenkopf (12) der Schraube oder des Bolzens hin erstreckt

2. Verbindungsmittel (10, 10', 10", 10‴, 10"") gemäß Anspruch 1, wobei das Verbindungsmittel (10, 10', 10", 10‴, 10"") oder der Schaft (14) des Verbindungsmittels (10, 10', 10", 10‴, 10"") eine Bohrung aufweist, in welche das Thermoelement (18, 18') eingelassen ist; oder
wobei das Verbindungsmittel (10, 10', 10", 10‴, 10"") oder der Schaft (14) des Verbindungsmittels (10, 10', 10", 10‴, 10"") eine konusförmige Bohrung aufweist, in welche das Thermoelement (18, 18') eingelassen ist.

3. Verbindungsmittel (10, 10', 10", 10‴, 10"") gemäß Anspruch 1 oder 2, wobei die Elektronik (13) einen Energiespeicher (13b) oder elektrischen Energiespeicher (13b) umfasst.

4. Verbindungsmittel (10, 10', 10", 10‴, 10"") gemäß einem der vorherigen Ansprüche, wobei das Verbindungsmittel (10, 10', 10", 10‴, 10"") einen Kühlkörper (15) aufweist, oder wobei das Verbindungsmittel (10, 10', 10", 10‴, 10"") einen Kühlkörper (15) aufweist und der Kühlkörper (15) in dem Schraubenkopf (12) integriert ist.

5. Verbindungsmittel (10, 10', 10", 10‴, 10ʺʺ) gemäß einem der vorherigen Ansprüche, wobei das Verbindungsmittel (10, 10', 10", 10‴, 10ʺʺ) eine Solarzelle (26) als Energieversorgungsmittel aufweist oder wobei das Verbindungsmittel (10, 10', 10", 10‴, 10"") eine Solarzelle (26) als Energieversorgungsmittel aufweist, und die Solarzelle (26) im Bereich des Schraubenkopfes (12) angeordnet ist.

6. Verbindungsmittel (10, 10', 10", 10‴, 10"") gemäß einem der vorherigen Ansprüche, wobei das Thermoelement (18, 18') den Bereich des Gewindes des Verbindungsmittels (10, 10', 10", 10‴, 10"") als Temperaturquelle nutzt und den Schraubenkopf (12) als Temperatursenke oder wobei das Thermoelement (18, 18') den Bereich des Gewindes als Temperatursenke nutzt und den Bereich des Schraubenkopfes (12) als Temperaturquelle oder wobei das Thermoelement (18, 18') in Abhängigkeit der Zeit den Bereich des Gewindes als Temperaturquelle, den Bereich des Schraubenkopfes (12) als Temperatursenke oder den Bereich des Gewindes als Temperatursenke und den Bereich des Schraubenkopfes (12) als Temperaturquelle nutzt.

7. Verbindungsmittel (10, 10', 10", 10‴, 10"") gemäß einem der vorherigen Ansprüche, wobei das Thermoelement (18, 18') ausgebildet ist, um ausgehend von der Temperaturdifferenz (ΔT) zwischen einer Temperaturquelle und einer Temperatursenke eine elektrische Leistung zu generieren.

8. Verbindungsmittel (10, 10', 10", 10‴, 10"") gemäß einem der Ansprüche 3-7, wobei die Elektronik (13) als Elektronikplatine im Bereich des Schraubenkopfes (12) zwischen einem Kühlkörper (15) und dem Schraubenkopf (12) angeordnet ist.

9. Verbindungsmittel (10, 10', 10", 10‴, 10"") gemäß Anspruch 8, wobei das Thermoelement (18, 18') durch die Elektronik (13) hindurchragt.

10. Verbindungsmittel (10, 10', 10", 10‴, 10"") gemäß einem der vorherigen Ansprüche, wobei das Thermoelement (18, 18') in einem mittleren Bereich des Verbindungsmittels (10, 10', 10", 10‴, 10"") oder einem Schaft (14) des Verbindungsmittels (10, 10', 10", 10‴, 10"") thermisch isoliert ist.

11. Verbindungsmittel (10, 10', 10", 10‴, 10"") gemäß einem der vorherigen Ansprüche, wobei das Thermoelement (18, 18') mit einer Wärmebrücke (21) gekoppelt ist oder verlötet ist; oder
wobei das Thermoelement (18, 18') mit einer Wärmebrücke (21) gekoppelt ist oder verlötet ist und wobei die Wärmebrücke (21) mit einem Schraubenkopf (12) oder einem Kühlkörper (15) gekoppelt ist; und/oder
wobei das Thermoelement (18, 18') mit mindestens einer Wärmeleitplatte (21) gekoppelt ist.

12. Verbindungsmittel (10, 10', 10", 10‴, 10"") gemäß einem der vorherigen Ansprüche, wobei das Verbindungsmittel (10, 10', 10", 10‴, 10"") einen Sensor (13t) aufweist, der im Bereich des Gewindes vorgesehen ist oder der in das Thermoelement (18, 18') integriert ist,
wobei der Sensor (13t) ausgebildet ist, eine Temperatur zu bestimmen.

## Claims

1. Connecting means (10, 10', 10", 10‴, 10ʺʺ), comprising:
energy supply means in the form of at least one thermocouple (18, 18'), wherein the at least one thermocouple (18, 18') is embedded in a shaft (14) of the connecting means (10, 10', 10", 10‴, 10ʺʺ);
wherein the connecting means (10, 10', 10", 10‴, 10ʺʺ) includes electronics (13), wherein the electronics (13) comprises sensor technology, a processor for sensor technology and/or communication means; and wherein the sensor technology, the processor or the communication means are supplied with energy by the energy supply means,
wherein the connecting means is realized in the form of a screw or bolt, **characterized in that**
the thermocouple (18, 18') or the thermocouple (18, 18') in combination with a thermal bridge (21) extends along the longitudinal direction of the screw or the bolt from a point in the area of the screw thread (14g) of the screw or the bolt or from a screw tip to the screwhead (12) of the screw or the bolt.

2. Connecting means (10, 10', 10", 10‴, 10ʺʺ) according to claim 1, wherein the connecting means (10, 10', 10", 10‴, 10ʺʺ) or the shaft (14) of the connecting means (10, 10', 10", 10‴, 10ʺʺ) comprises a bore in which the thermocouple (18, 18') is embedded; or
wherein the connecting means (10, 10', 10", 10"', 10ʺʺ) or the shaft (14) of the connecting means (10, 10', 10", 10‴, 10ʺʺ) comprises a conical bore in which the thermocouple (18, 18') is embedded.

3. Connecting means (10, 10', 10", 10‴, 10ʺʺ) according to claim 1 or 2, wherein the electronics (13) includes an energy storage (13b) or an electric energy storage (13b).

4. Connecting means (10, 10', 10", 10‴, 10ʺʺ) according to any of the preceding claims, wherein the connecting means (10, 10', 10", 10‴, 10ʺʺ) comprises a cooling body (15), or wherein the connecting means (10, 10', 10", 10‴, 10ʺʺ) comprises a cooling body (15) and the cooling body (15) is integrated into the screwhead (12).

5. Connecting means (10, 10', 10", 10‴, 10ʺʺ) according to any of the preceding claims, wherein the connecting means (10, 10', 10", 10‴, 10ʺʺ) comprises a solar cell (26) as energy supply means or wherein the connecting means (10, 10', 10", 10‴, 10ʺʺ) comprises a solar cell (26) as energy supply means and the solar cell (26) is arranged in the area of the screwhead (12).

6. Connecting means (10, 10', 10", 10‴, 10ʺʺ) according to any of the preceding claims, wherein the thermocouple (18, 18') uses the area of the thread of the connecting means (10, 10', 10", 10‴, 10ʺʺ) as temperature source and the screwhead (12) as temperature sink, or wherein the thermal element (18, 18') uses the area of the thread as temperature sink and the area of the screwhead (12) as temperature source, or wherein the thermocouple (18, 18') uses, depending on the time, the area of the thread as temperature source, the area of a screwhead (12) as temperature sink or the area of the thread as temperature sink and the area of the screwhead (12) as temperature source.

7. Connecting means (10, 10', 10", 10‴, 10ʺʺ) according to any of the preceding claims, wherein the thermocouple (18, 18') is configured to generate electric power, based on the temperature difference (ΔT) between a temperature source and a temperature sink.

8. Connecting means (10, 10', 10", 10‴, 10ʺʺ) according to any of claims 3 to 7, wherein the electronics (13) is arranged as electronic board in the area of the screwhead (12) between a cooling body (15) and the screwhead (12).

9. Connecting means (10, 10', 10", 10‴, 10ʺʺ) according to claim 8, wherein the thermocouple (18, 18') protrudes through the electronics (13).

10. Connecting means (10, 10', 10", 10‴, 10ʺʺ) according to any of the preceding claims, wherein the thermocouple (18, 18') is thermally insulated in a central area of the connecting means (10, 10', 10", 10‴, 10ʺʺ) or a shaft (14) of the connecting means (10, 10', 10", 10‴, 10ʺʺ).

11. Connecting means (10, 10', 10", 10‴, 10ʺʺ) according to any of the preceding claims, wherein the thermocouple (18, 18') is coupled or soldered to a thermal bridge (21); or
wherein the thermocouple (18, 18') is coupled or soldered to a thermal bridge (21) and wherein the thermal bridge (21) is coupled to a screwhead (12) or a cooling body (15); and/or
wherein the thermocouple (18, 18') is coupled to at least one heat conducting plate (21).

12. Connecting means (10, 10', 10", 10‴, 10ʺʺ) according to any of the preceding claims, wherein the connecting means (10, 10', 10", 10‴, 10ʺʺ) comprises a sensor (13t) that is provided in the area of the thread or integrated in the thermocouple (18,18'),
wherein the sensor (13t) is configured to determine a temperature.

## Revendications

1. Moyen de connexion (10, 10', 10", 10‴, 10"") aux caractéristiques suivantes:
un moyen d'alimentation en énergie sous forme d'au moins un thermocouple (18, 18'), où l'au moins un thermocouple (18, 18') est intégré dans un manche (14) du moyen de connexion (10, 10', 10", 10‴, 10ʺʺ);
dans lequel le moyen de connexion (10, 10', 10", 10‴, 10"") comporte une électronique (13); dans lequel l'électronique (13) présente un système de capteur, un processeur pour le système de capteur et/ou des moyens de communication; et dans lequel le système de capteur, le processeur ou les moyens de communication sont alimentés en énergie par les moyens d'alimentation en énergie,
dans lequel le moyen de connexion est réalisé sous forme d'une vis ou d'un boulon,
**caractérisé par le fait que** le thermocouple (18, 18') ou le thermocouple (18, 18') en combinaison avec un pont thermique (21) s'étend le long de la direction longitudinale de la vis ou du boulon d'un point dans la zone d'un filet de vis (14g) de la vis ou du boulon ou d'une pointe de vis à la tête de vis (12) de la vis ou du boulon.

2. Moyen de connexion (10, 10', 10", 10‴, 10"") selon la revendication 1, dans lequel le moyen de connexion (10, 10', 10", 10‴, 10ʺʺ) ou le manche (14) du moyen de connexion (10, 10', 10", 10‴, 10ʺʺ) présente un alésage dans lequel est intégré le thermocouple (18, 18'); ou
dans lequel le moyen de connexion (10, 10', 10", 10‴, 10"") ou le manche (14) du moyen de connexion (10, 10', 10", 10‴, 10"") présente un alésage conique dans lequel est intégré le thermocouple (18, 18').

3. Moyen de connexion (10, 10', 10", 10"', 10"") selon la revendication 1 ou 2, dans lequel l'électronique (13) comporte un accumulateur d'énergie (13b) ou un accumulateur d'énergie électrique (13b).

4. Moyen de connexion (10, 10', 10", 10‴, 10"") selon l'une des revendications précédentes,
dans lequel le moyen de connexion (10, 10', 10", 10‴, 10"") présente un dissipateur thermique (15), ou dans lequel le moyen de connexion (10, 10', 10", 10‴, 10ʺʺ) présente un dissipateur thermique (15) et le dissipateur thermique (15) est intégré dans la tête de vis (12).

5. Moyen de connexion (10, 10', 10", 10‴, 10ʺʺ) selon l'une des revendications précédentes,
dans lequel le moyen de connexion (10, 10', 10", 10‴, 10"") présente une cellule solaire (26) comme moyen d'alimentation en énergie ou dans lequel le moyen de connexion (10, 10', 10", 10‴, 10ʺʺ) présente une cellule solaire (26) comme moyen d'alimentation en énergie, et la cellule solaire (26) est disposée dans la zone de la tête de vis (12).

6. Moyen de connexion (10, 10', 10", 10‴, 10ʺʺ) selon l'une des revendications précédentes, dans lequel le thermocouple (18, 18') utilise la zone du filet du moyen de connexion (10, 10', 10", 10‴, 10ʺʺ) comme source de température et la tête de vis (12) comme puits de température ou dans lequel le thermocouple (18, 18') utilise la zone du filet comme puits de température et la zone de la tête de vis (12) comme source de température ou dans lequel le thermocouple (18, 18') utilise, en fonction du temps, la zone du filet comme source de température, la zone de la tête de vis (12) comme puits de température ou la zone du filet comme puits de température et la zone de la tête de vis (12) comme source de température.

7. Moyen de connexion (10, 10', 10", 10‴, 10ʺʺ) selon l'une des revendications précédentes, dans lequel le thermocouple (18, 18') est conçu pour générer, en partant de la différence de température (ΔT) entre une source de température et un puits de température, une puissance électrique.

8. Moyen de connexion (10, 10', 10", 10"', 10"") selon l'une des revendications 3 à 7,
dans lequel l'électronique (13) est disposée comme carte électronique dans la zone de la tête de vis (12) entre un dissipateur thermique (15) et la tête de vis (12).

9. Moyen de connexion (10, 10', 10", 10‴, 10ʺʺ) selon la revendication 8,
dans lequel le thermocouple (18, 18') passe à travers l'électronique (13).

10. Moyen de connexion (10, 10', 10", 10‴, 10ʺʺ) selon l'une des revendications précédentes, dans lequel le thermocouple (18, 18') est isolé thermiquement dans une région centrale du moyen de connexion (10, 10', 10", 10‴, 10ʺʺ) ou dans un manche (14) du moyen de connexion (10, 10', 10", 10‴, 10ʺʺ).

11. Moyen de connexion (10, 10', 10", 10‴, 10"") selon l'une des revendications précédentes, dans lequel le thermocouple (18, 18') est couplé ou soudé à un pont thermique (21); ou
dans lequel le thermocouple (18, 18') est couplé ou soudé à un pont thermique (21) et dans lequel le pont thermique (21) est couplé à une tête de vis (12) ou à un dissipateur thermique (15); et/ou
dans lequel le thermocouple (18, 18') est couplé à au moins une plaque conductrice de chaleur (21).

12. Moyen de connexion (10, 10', 10", 10"', 10ʺʺ) selon l'une des revendications précédentes, dans lequel le moyen de connexion (10, 10', 10", 10‴, 10ʺʺ) présente un capteur (13t) qui est prévu au niveau du filet ou qui est intégré au thermocouple (18, 18'),
dans lequel le capteur (13t) est conçu pour déterminer une température.
